# EUROPÄISCHE PATENTSCHRIFT

(11) **EP 0 490 156 B1**
(45) Veröffentlichungstag und Bekanntmachung des Hinweises auf die Patenterteilung: **20.10.1993**
(21) Anmeldenummer: 91120104.4
(22) Anmeldetag: 26.11.1991
(51) Int. Cl.: C01B 3/00

(54) **Verfahren zur Herstellung aktiver, reversibel H2 aufnehmender Magnesiumhydrid-Magnesium-Wasserstoff-Speichersysteme**
Process for manufacturing active, reversible, H2 accepting magnesium hydride-magnesium-hydrogen storage system
Procédé de préparation d'un système de stockage hydrure de magnésium-magnésium-hydrogène, accepteur d'hydrogène, actif et réversible

(30) Priorität: 08.12.1990 DE 4039278
(43) Veröffentlichungstag der Anmeldung: 17.06.1992
(73) Patentinhaber: Th. Goldschmidt AG, 45127 Essen (DE)
(72) Erfinder: Knott, Wilfried, Dr., W-4300 Essen 1 (DE); Klein, Klaus-Dieter, Dr., W-4330 Mülheim a.d. Ruhr (DE); Koerner, Götz, Dr., W-4300 Essen (DE)

(56) Entgegenhaltungen:
- EP-A- 0 112 548
- GB-A- 1 309 806
- INTERNATIONAL JOURNAL OF HYDROGEN ENERGY. Bd. 11, Nr. 3, 1986, OXFORD GB Seiten 169 - 192; P. SELVAM ET AL.: 'Megnesium and magnesium alloy hydrides'

## Beschreibung

Die Erfindung betrifft ein Verfahren zur Herstellung aktiver, reversibel H₂ aufnehmender Magnesiumhydrid-Magnesium-Wasserstoff-Speicher-Systeme unter Zusatz eines Katalysators für die Wasserstoffaufnahme unter Hydridbildung.

Von den bekannten Metallhydrid-Metall-Systemen, die als reversible Wasserstoff-Speichersysteme in Frage kommen, zeichnet sich das MgH₂-Mg-System durch den höchsten Gewichtsanteil an reversibel gebundenem Wasserstoff (7,65 Gew.-%) und damit die höchste Energiedichte je Gewichtseinheit des Speichermaterials aus (2332 Wh/kg).

Einer Anwendung solcher Speichersysteme für mobile Zwecke stand bisher die unbefriedigende Kinetik dieses Systems im Wege. So ist es bekannt, daß sich reines Magnesium nur unter drastischen Bedingungen und auch dann nur sehr langsam und unvollständig hydrieren läßt.

Man hat deshalb versucht, die Hydrierbarkeit des Magnesiums durch Dotierung oder Legierung des Magnesiums mit Fremdmetallen, wie Al, In, Fe, Mg₂Ni, Mg₂Cu oder LaNi₅, zu verbessern. Hierdurch konnten zwar Verbesserungen hinsichtlich der Kinetik erzielt werden, jedoch blieben noch wesentliche Nachteile bestehen, wie z. B. die Notwendigkeit drastischer Bedingungen bei der Ersthydrierung des dotierten Magnesiums. Außerdem lagen die Speicherkapazitäten solcher Systeme unter dem theoretisch zu erwartenden Wert.

Von diesem Stand der Technik ausgehend befaßt sich die EP-A 0 112 548 mit dem Problem der Verbesserung der Magnesiumhydrid-Magnesium-Wasserstoff-Speichersysteme und insbesondere mit der verbesserten Dotierung. Die EP-A 0 112 548 lehrt ein Verfahren der oben bezeichneten Gattung mit dem Kennzeichen, daß man Magnesiumhydrid oder metallisches Magnesium in fein verteilter Form durch Kontakt mit einer Lösung eines Metallkomplexes und/oder einer metallorganischen Verbindung eines Metalls der IV. bis VIII. Nebengruppe des periodischen Systems, gegebenenfalls in Gegenwart von Wasserstoff, umsetzt, wobei das jeweilige Übergangsmetall an der Oberfläche der Magnesiumhydrid- und/oder Magnesiumpartikel abgeschieden wird.

Ein Nachteil dieser Verfahrensweise ist jedoch die Notwendigkeit des Einsatzes von Metallkomplexen oder metallorganischen Verbindungen, die meist teuer, häufig gefährlich zu handhaben und/oder toxisch sind. Ein derartiges Verfahren kann deshalb aus wirtschaftlichen Gründen, aus Gründen der Umweltfreundlichkeit und in Hinblick auf Gefahrenmomente für das mit der Verfahrensdurchführung beauftragte Personal noch nicht völlig befriedigen.

Die vorliegende Erfindung befaßt sich deshalb mit dem technischen Problem der Katalyse der Hydrierungsreaktion unter Bedingungen, bei denen die vorstehend genannten Nachteile nicht auftreten.

Überraschenderweise wurde gefunden, daß die Hydrierung des Magnesiums problemlos gelingt, wenn man erfindungsgemäß dem zu hydrierenden feinteiligen Magnesium bei der Ersthydrierung als Katalysator Magnesiumhydrid einer Teilchengröße von ≦ 400 µm in einer Menge von mindestens 1,2 Gew.-%, bezogen auf zu hydrierendes Magnesium, zusetzt und die Hydrierung bei einer Temperatur von ≧ 250°C und einem Druck von 0,5 bis 5 MPa durchführt.

Es ist dabei von besonderem Vorteil, das Reaktionsgut während der Hydrierung unter ständigem Rühren zu durchmischen. Hierdurch wird erreicht, daß das entstehende Magnesiumhydrid als feinteiliges, fließfähiges und gut handhabbares Produkt erhalten wird. Durch das Rühren wird auch die Hydrierungsreaktion selbst begünstigt.

Offensichtlich weist das dem zu hydrierenden Magnesium zugesetzte feinteilige MgH₂ einen autokatalytischen Effekt auf. Dies geht aus folgenden Versuchsergebnissen hervor:

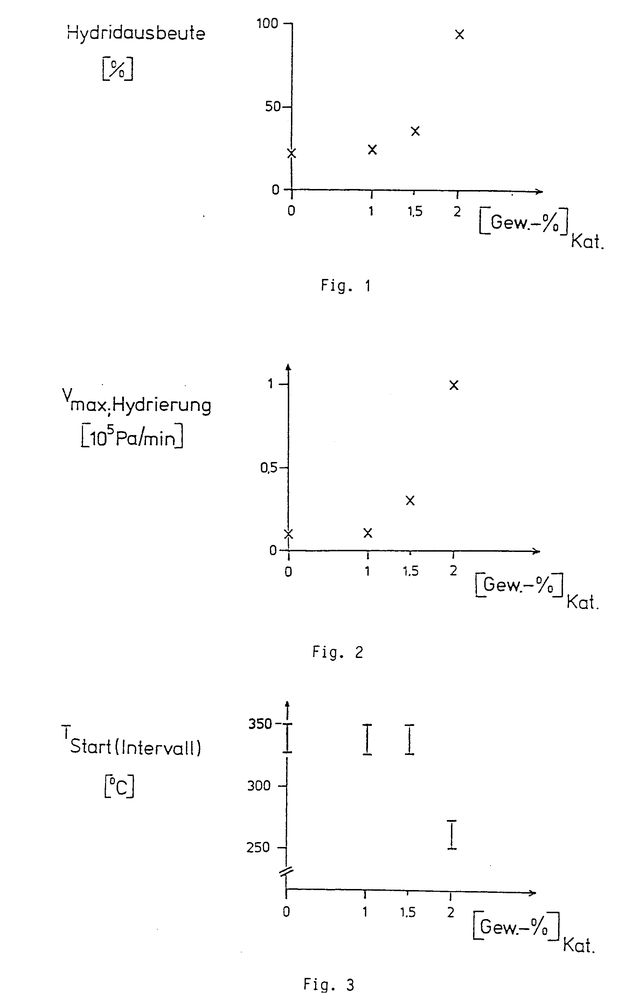

In Fig. 1 ist die Hydridausbeute [ in % des theoretischen Wertes ] in Abhängigkeit von der zugesetzten Menge Magnesiumhydrid [ in %, bezogen auf Magnesium ] dargestellt. Entsprechend dem Zusatz an feinteiligem Magnesiumhydrid steigt die Hydridausbeute von 22 % ohne Zusatz auf 40 % bei einem Zusatz von 1,5 Gew.-% Magnesiumhydrid und erreicht 94 % bei einem Zusatz von 2 Gew.-% Magnesiumhydrid.

In Fig. 2 ist die Hydriergeschwindigkeit [ gemessen als Druckabfall in 10⁵Pa/min ] wiederum in Abhängigkeit von der zugesetzten Menge Magnesiumhydrid gezeigt. Die Hydriergeschwindigkeit verzehnfacht sich, erkennbar an der Steigerung des Druckabfalls von 10⁴Pa/min auf 10⁵Pa/min, bei einem Zusatz von 2 Gew.-% Magnesiumhydrid.

In Fig. 3 ist die Abhängigkeit der Starttemperatur der Hydrierungsreaktion von der zugesetzten Menge Magnesiumhydrid erkennbar. Während bis zu einem Gehalt von etwa 1,2 Gew.-% Magnesiumhydrid die Reaktion unter den gegebenen Bedingungen bei 320 bis 340°C einsetzt, beginnt die Reaktion bei einem Zusatz von 2 Gew.-% Magnesiumhydrid bereits bei 250 bis 270°C. Dies ist ein Hinweis für die enorme Erniedrigung der Reaktionsschwelle.

Damit ist die überraschende autokatalytische Wirkung von geringen Mengen zugesetzten Magnesiumhydrid auf die Hydrierungsreaktion des Magnesiums glaubhaft gemacht.

Das Verfahren erfüllt die vorgenannten Bedingungen: es ist wirtschaftlich, umweltfreundlich und vermeidet das Arbeiten mit größeren Mengen metallorganischer Komplexe oder Verbindungen.

Das erfindungsgemäße Verfahren wird anhand des folgenden Beispiels noch näher erläutert:

### Beispiel

500 g (20,58 Mol) Magnesiumpulver mit einer mittleren Korngröße von 54 µm (270 mesh) werden zusammen mit 10 g (0,38 Mol) Magnesiumhydrid mit einer mittleren Korngröße von 54 um unter intensivem Rühren in einem 5-l-Rührautoklaven vorgelegt. Der Autoklav wird evakuiert, bis sich ein Druck von 133 Pa einstellt. Der Reaktor wird dann mit Wasserstoff bis zu einem Druck von 0,51 MPa befüllt. Anschließend wird der Reaktor auf 350°C unter weiterem ständigen Rühren aufgeheizt. Druck- und Temperaturverlauf werden über einen Mehrkanalschreiber registriert. Mit einsetzender Hydrierung bei einer Temperatur von ≧ 250°C wird ein permanenter H₂-Druck von 0,58 MPa aufrechterhalten. Die Reaktion ist nach etwa 7 Stunden beendet. Nach Erkalten wird der Reaktor evakuiert und anschließend mit Argon gespült. Das Magnesiumhydrid wird als freifließendes Pulver in ein ausgeheiztes und mit Argon gefülltes Gefäß abgefüllt.

Auswaage: 540,2 g (98 % der Theorie)

Der Hydridgehalt einer Probe wird nach Zh. Neorgh. Khim. 6, 1961, gasvolumetrisch durch Zersetzen mit H₂CrO₄ bestimmt. Es wird ein Hydridgehalt von 7,1 % ermittelt.

Zum Vergleich wird eine Verbrennungsanalyse durchgeführt, die ebenfalls einen Hydridgehalt von 7,1 % ergibt.

## Patentansprüche

1. Verfahren zur Herstellung aktiver, reversibel H₂ aufnehmender Magnesiumhydrid-Magnesium-Wasserstoff-Speichersysteme unter Zusatz eines Katalysators für die Wasserstoffaufnahme unter Hydridbildung, dadurch gekennzeichnet, daß man dem zu hydrierenden feinteiligen Magnesium bei der Ersthydrierung als Katalysator Magnesiumhydrid einer Teilchengröße von ≦ 400 µm in einer Menge von mindestens 1,2 Gew.-%, bezogen auf zu hydrierendes Magnesium, zusetzt und die Hydrierung bei einer Temperatur von ≧ 250°C und einem Druck von 0,5 bis 5 MPa durchführt.

2. Verfahren nach Anspruch 1, dadurch gekennzeichnet, daß man das Reaktionsgut während der Hydrierung unter ständigem Rühren durchmischt.

## Claims

1. Process for the preparation of active magnesium hydride/magnesium hydrogen-storage systems which reversibly adsorb H₂, with addition of a catalyst for the adsorption of hydrogen with hydride formation, characterised in that, as catalyst, magnesium hydride having a particle size of ≦ 400 µm in an amount of at least 1.2% by weight, based on the magnesium to be hydrogenated, is added to the finely divided magnesium to be hydrogenated during the first hydrogenation, and the hydrogenation is carried out at a temperature of ≧ 250°C and a pressure of from 0.5 to 5 MPa.

2. Process according to Claim 1, characterised in that the reactants are mixed thoroughly during the hydrogenation with constant stirring.

## Revendications

1. Procédé de fabrication de systèmes actifs de stockage à base d'hydrure de magnésium-magnésium-hydrogène absorbant H₂ de manière réversible, avec addition d'un catalyseur pour l'absorption d'hydrogène, avec formation d'un hydrure, caractérisé en ce qu'on ajoute au magnésium finement divisé à hydrogéner, lors de l'hydrogénation initiale, comme catalyseur, un hydrure de magnésium d'une grosseur de particules de ≦ 400 µm, en une quantité d'au moins 1,2 % en poids par rapport au magnésium à hydrogéner, et on effectue l'hydrogénation à une température de ≧ 250°C et à une pression de 0,5 à 5 MPa.

2. Procédé selon la revendication 1, caractérisé en ce qu'on mélange intimement le produit de réaction pendant l'hydrogénation, sous agitation continue.
